# EUROPEAN PATENT APPLICATION

(11) **EP 0 955 225 A2**
(43) Date of publication of application: **10.11.1999**
(21) Application number: 99201384.7
(22) Date of filing: 04.05.1999
(51) Int. Cl.: B62D 1/19

(54) **Energy absorbing steering column for motor vehicle**

(30) Priority: 04.05.1998 US 72234
(71) Applicant: Delphi Technologies, Inc., Troy, MI 48007 (US)
(72) Inventor: Stuedemann, Richard Thomas, Hemlock, Michigan 48626 (US); Ross, Kevin Carlton, Hemlock, Michigan 48626 (US)
(74) Representative: Denton, Michael John

(57) **Abstract**

A steering column (10) for a motor vehicle including a mast jacket (16) having a collapse stoke (5) in response to an impact on a steering hand wheel (30) on the steering column and an energy absorber (32) for converting into work a fraction of the kinetic energy of the impact. The energy absorber (32) includes a mounting bracket (34) on the mast jacket, a slot (40A,40B) in the mounting bracket, and a capsule (46A,46B) clamped to a body of the motor vehicle and coupled to the mounting bracket in the slot therein. The capsule supports the mast jacket vertically on the vehicle body and separates from the mounting bracket at the onset of the collapse stroke of the mast jacket. A pair of J-shaped flat metal straps (78A,78B,80A,80B) are seated in guide slots in the capsule with a concave web (86) of each strap bearing against a convex anvil (68) on the capsule. One end (82) of each strap is welded to the mounting bracket so that the J-shaped flat metal straps are plastically deformed by being pulled over the convex anvil during the collapse stroke of the mast jacket to convert into work a fraction of the kinetic energy of the impact on the steering hand wheel.

## Description

### TECHNICAL FIELD

This invention relates to energy absorbing steering columns for motor vehicles.

### BACKGROUND OF THE INVENTION

In a typical energy absorbing steering column for a motor vehicle, an energy absorber converts into work a fraction of the kinetic energy of an impact on the steering column concurrent with linear collapse of a main housing or mast jacket of the steering column through a collapse stroke. In one prior energy absorber, a concave web of a stationary flat metal strap attached to a body of the motor vehicle is guided over a convex anvil on the mast jacket during the collapse stroke of the mast jacket. The convex anvil forces the concave web along the length of the metal strap in wave-like fashion to effect plastic deformation of the metal strap and corresponding conversion into work of a fraction of the kinetic energy of the impact. An energy absorbing steering column according to this invention is a novel alternative to prior energy absorbing steering columns having energy absorbers in which a flat metal strap is plastically deformed during a collapse stroke of a mast jacket of the steering column.

### SUMMARY OF THE INVENTION

This invention is a new and improved energy absorbing steering column for a motor vehicle including a mast jacket having a collapse stoke in response to an impact on a steering hand wheel on the steering column and an energy absorber for converting into work a fraction of the kinetic energy of the impact. The energy absorber includes a mounting bracket on the mast jacket, a slot in the mounting bracket, and a capsule clamped to a body of the motor vehicle and coupled to the mounting bracket in the slot therein. The capsule supports the mast jacket vertically on the vehicle body and separates from the mounting bracket at the onset of the collapse stroke of the mast jacket. A pair of J-shaped flat metal straps of the energy absorber are seated in guide slots in the capsule with a concave web of each strap bearing against a convex anvil on the capsule. One end of each strap is welded to the mounting bracket so that the J-shaped flat metal straps are plastically deformed by being pulled over the convex anvil during the collapse stroke of the mast jacket to convert into work a fraction of the kinetic energy of the impact on the steering hand wheel.

### BRIEF DESCRIPTION OF THE DRAWINGS

- Figure 1: is a broken-away elevational view of a motor vehicle having thereon a steering column according to this invention;
- Figure 2: is an enlarged sectional view taken generally along the plane indicated by lines 2-2 in Figure 1;
- Figure 3: is similar to Figure 2 showing structural elements of an energy absorber of the steering column according to this invention in different relative positions;
- Figure 4: is an enlarged sectional view taken generally along the plane indicated by lines 4-4 in Figure 2; and
- Figure 5: is a fragmentary perspective view of the energy absorber of the steering column according to this invention.

### DESCRIPTION OF THE PREFERRED EMBODIMENT

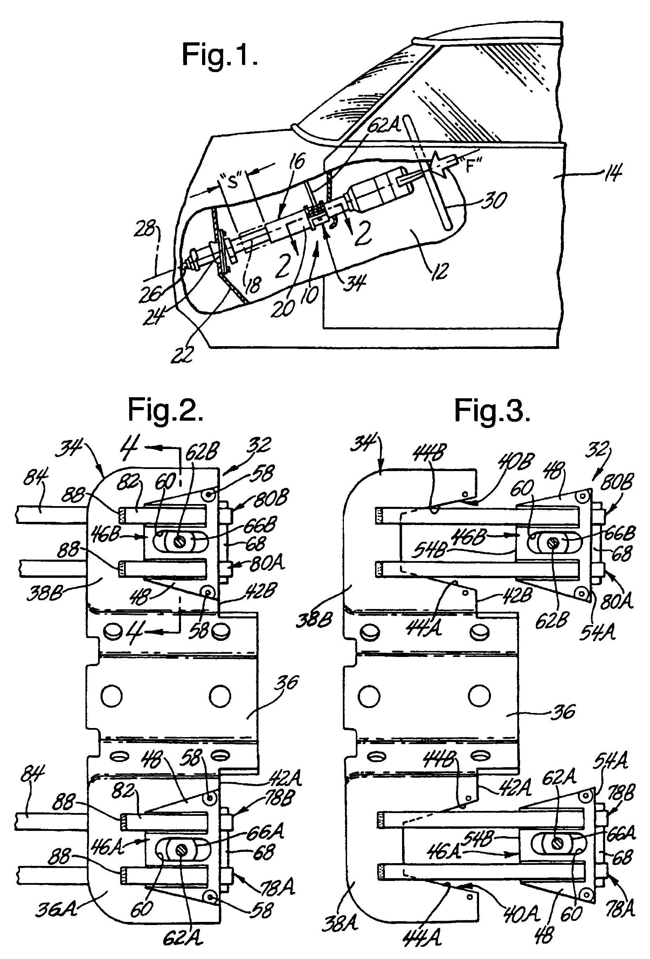

An energy absorbing steering column 10 according to this invention is disposed in a passenger compartment 12 of a body 14 of a motor vehicle. The steering column 10 includes a tubular mast jacket assembly 16 consisting of a lower mast 18 and an upper mast jacket 20 telescopically overlapping the lower mast jacket. The lower mast jacket is connected to a vertical panel 22 of the body 14 at the front of the passenger compartment through a lower bracket 24. A steering shaft 26 is supported on the mast jacket assembly 16 for rotation about a longitudinal centerline 28 of the steering column and connected to a steering gear, not shown, of the motor vehicle in front of the vertical panel 22. A steering hand wheel 30 is attached to the steering shaft at the top of the steering column. The upper mast jacket 20 and the steering shaft 26 are collapsible in the direction of the longitudinal centerline 28 of the steering column through a collapse stroke "S", Figure 1, in response to an impact on the steering hand wheel represented by a schematic force vector "F".

An energy absorber 32 of the steering column 10 includes a mounting bracket 34 having a U-shaped body 36 rigidly attached to the upper mast jacket 20 and a pair of planar flanges 38A,38B on opposite sides of the upper mast jacket. The planar flanges are interrupted by respective ones of a pair of slots 40A,40B, Figure 3, open through respective ones of a pair of lateral edges 42A,42B of the planar flanges facing the steering hand wheel. Each of the slots 40A,40B has a pair of converging side edges 44A,44B intersecting corresponding ones of the lateral edges 42A,42B.

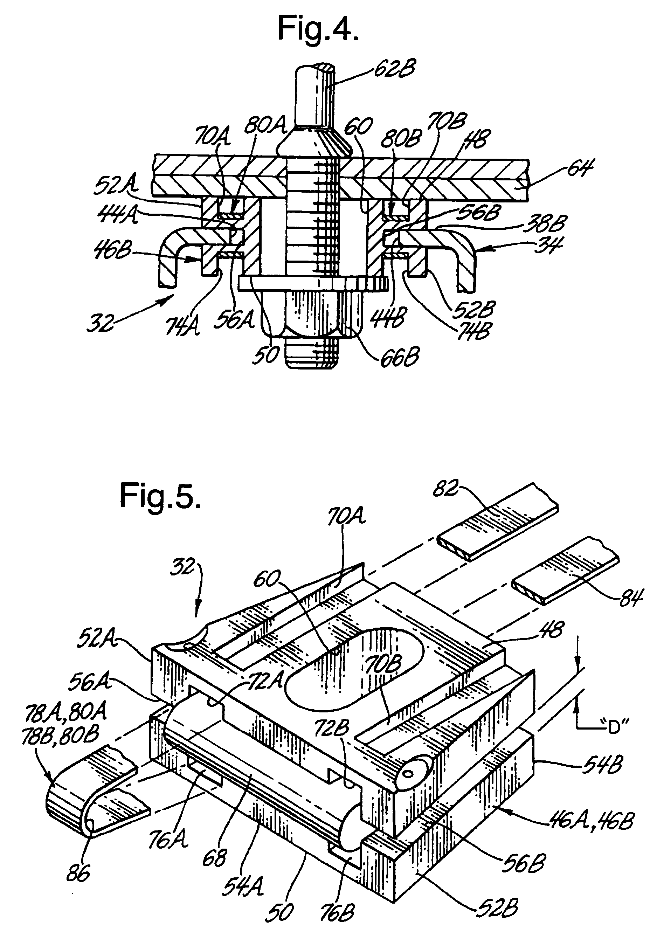

The energy absorber 32 further includes a pair of capsules 46A,46B made of die cast metal or molded plastic. Each of the capsules has a top side 48, a bottom side 50, a pair of longitudinal sides 52A,52B converging at about the angle of convergence between the side edges 44A,44B of the slots 40A,40B, and a pair of lateral sides 54A,54B. The longitudinal sides 52A,52B of the capsules are interrupted by respective ones of a pair of channels 56A,56B between the lateral sides 54A,54B. The channels 56A,56B cooperate with the side edges 44A,44B in guiding the capsules 46A,46B into and out of the slots 40A,40B in the mounting bracket while restricting relative movement therebetween perpendicular to the planar flanges. A depth dimension "D", Figure 5, of the linear channels 56A,56B corresponds generally to the thickness of the planar flanges to minimize lash between the capsules and the mounting bracket perpendicular to the planar flanges. A plurality of molded-in-place plastic pins 58 retain the capsules in the slots 40A,40B.

Each of the capsules 46A,46B is perforated between the top and the bottom sides 48,50 thereof by an elongated slot 60. A pair of generally vertical hanger bolts 62A,62B are rigidly attached to the body 14 of the motor vehicle perpendicular to a platform 64, Figure 4, on the body. The hanger bolts extend vertically through respective ones of the slots 60 in the capsules. A pair of fasteners 66A,66B on respective ones of the hanger bolts below the capsules cooperate with the hanger bolts in clamping the capsules against the platform 64. The capsules 46A,46B are thus rigidly attached to the body 14 of the motor vehicle and support the upper mast jacket 20 vertically for normal steering of the motor vehicle.

As seen best in Figure 5, each of the capsules 46A,46B has a convex anvil 68 on the lateral side 54A thereof perpendicular to the direction of the collapse stroke of the upper mast jacket 20. The top side 48 of each of the capsules in interrupted by a pair of upper guide slots 70A,70B on opposite sides of the elongated slot 60 parallel to the direction of the collapse stroke of the upper mast jacket. The upper guide slots 70A,70B intersect the lateral side 54A of the capsule tangent to the convex anvil 68 through respective ones of a pair of windows 72A,72B in the lateral side. The bottom side 50 of each of the capsules is interrupted by a pair of lower guide slots 74A,74B, Figure 4, on opposite sides of the elongated slot 60 parallel to the direction of the collapse stroke of the upper mast jacket. The lower guide slots 74A,74B intersect the lateral side 54A of the capsule tangent to the convex anvil 68 through corresponding ones of a second pair of windows 76A,76B in the lateral side.

The energy absorber 32 further includes two pairs of J-shaped flat metal straps 78A,78B and 80A,80B. Each of the flat metal straps 78A,78B and 80A,80B has a short side 82, a long side 84, and a concave web 86 between the short and the long sides. The flat metal straps 78A,78B are mounted on the capsule 46A with their webs 86 seated against the convex anvil 68, their short sides 82 seated in the upper guide slots 70A,70B through the windows 72A,72B and overlapping the closed end of the slot 40A in the mounting bracket, and their long sides 84 seated in the lower guide slots 74A,74B through the windows 76A,76B. Each of the flat metal straps 80A,80B is similarly seated on the capsule 46B. The short legs 82 of the metal straps 78A,78B and 80A,80B are attached by a plurality of welds 88 to the planar flanges 38A,38B of the mounting bracket.

The impact on the steering hand wheel 30 represented by the schematic force vector "F" is transferred to the upper mast jacket 20 and is resisted by the plastic pins 58 until the material strength of the pins is exceeded. After that, the collapse stroke "S" of the upper mast jacket commences and effects linear separation between the slots 40A,40B in the planar flanges of the mounting bracket and the capsules 46A,46B rigidly clamped to the vehicle body by the hanger bolts 62A,62B and the fasteners 66A,66B. At the same time, the short sides 82 of the J-shaped flat metal straps 78A,78B and 80A,80B are tensioned between the welds 88 and the webs 86. The J-shaped flat metal straps are then pulled across the anvils and plastically deformed to convert into work a fraction of the kinetic energy of the impact "F" on the steering hand wheel. The windows 72A,72B guide the short sides 82 of the flat metal straps during energy absorbing plastic deformation. The windows 76A,76B maintain the webs 86 of the flat metal straps against the anvils 68 by preventing the long sides 84 of the J-shaped flat metal straps from flexing outward as the metal straps traverse the anvils.

## Claims

1. A steering column (10) for a motor vehicle including
a mast jacket (16) on a body (14) of said motor vehicle traversing a collapse stroke (5) in the direction of a longitudinal centerline (28) of said steering column in response to an impact on a steering hand wheel (30) on said steering column, and
an energy absorber (32) between said mast jacket (16) and said body (14) of said motor vehicle operative during said collapse stroke of said mast jacket to convert into work a fraction of the kinetic energy of said impact on said steering hand wheel (30),
characterized in that said energy absorber (32) comprises:
a mounting bracket (34) rigidly attached to said mast jacket (16),
a slot (40A,40B) in said mounting bracket (34) having an open end facing said steering hand wheel (30),
a capsule (46A,46B),
a guide means (44A,44B,56A,56B) operative to support said capsule (46A,46B) in said slot (40A,40B) for linear translation out of said slot through said open end and to restrain said capsule relative to said mounting bracket perpendicular to the direction of said collapse stroke of said mast jacket (16),
a clamp (60,62A,62B,66A,66B) means operative with said capsule (46A,46B) in said slot in said mounting bracket to rigidly clamp said capsule to said body (14) of said motor vehicle whereby said mast jacket is supported vertically on said body of said motor vehicle,
a convex anvil (68) on an end of said capsule (46A,46B) perpendicular to the direction of said collapse stroke of said mast jacket (16),
a J-shaped flat metal strap (78A,78B) having a first leg (82) and a second leg (84) and a concave web (86) therebetween bearing against said convex anvil (68), and
an attachment means (88) operative to rigidly attach said first leg (82) of said flat metal strap (35,78A,78B,80A,80B) to said mounting bracket (34) so that linear translation of said mounting bracket (16) as a unit with said mast jacket through said collapse stroke (S) of said mast jacket pulls said flat metal strap over said convex anvil (68) to plastically deform said flat metal strap and convert into work a fraction of the kinetic energy of said impact on said steering hand wheel.

2. The steering column for a motor vehicle recited in claim 1 further comprising:
a second guide means (76A,76B) operative to maintain said concave web (86) of said J-shaped flat metal strap (78A,78B,80A,80B) bearing against said convex anvil (68) during said collapse stroke of said mast jacket.

3. The steering column for a motor vehicle recited in claim 2 wherein said guide means operative to support said capsule (46A,46B) in said slot in said mounting bracket (34) comprises:
a pair of channels (56A,56B) on respective ones of a pair of longitudinal edges (52A,52B) of said capsule (46A,46B) slidably engaging respective ones of a pair of side edges (44A,44B) of said slot (40A,40B) in said mounting bracket (34).

4. The steering column for a motor vehicle recited in claim 3 wherein said clamp means operative to rigidly clamp said capsule (46A,46B) to said body (14) of said motor vehicle comprises:
a slot (60) in said capsule,
a hanger bolt (62A,62B) in said slot (60) in said capsule rigidly attached to said body (14) of said motor vehicle perpendicular to a platform (64) on said body of said motor vehicle, and
a fastener (66A,66B) on said hanger bolt (62A,62B) on the opposite side of said capsule (46A,46B) from said platform (64) on said body of said motor vehicle.

5. The steering column for a motor vehicle recited in claim 4 wherein said attachment means operative to rigidly attach said first leg of said J-shaped flat metal strap to said mounting bracket comprises:
a weld (88) between said first leg (82) of said J-shaped flat metal strap (78A,78B,80A,80B) and said mounting bracket (34).
